# EUROPEAN PATENT APPLICATION

(11) **EP 4 299 918 A1**
(43) Date of publication of application: **03.01.2024**
(21) Application number: 22181903.0
(22) Date of filing: 29.06.2022
(51) Int. Cl.: F15B 11/024, F15B 11/044, F15B 11/00, F15B 21/08

(54) **A HYDRAULIC SYSTEM**

(71) Applicant: Hyva Holding BV, 2408 AK Alphen aan den Rijn (NL)
(72) Inventor: BIEMOND, Jacob, 2411 LH Bodegraven (NL); DANGE, Ajinkya, 2313 DV Leiden (NL)
(74) Representative: Haseltine Lake Kempner LLP

(57) **Abstract**

There is disclosed a hydraulic system comprising: a double-acting hydraulic cylinder configured to extend and to retract, and connected to a hydraulic circuit. The hydraulic circuit comprises an over centre valve comprising: a pilot pressure responsive unidirectional valve defining an upstream end and a downstream end of the over centre valve corresponding to a permitted direction of flow through the pilot pressure responsive valve; and a bypass line in parallel with the pilot pressure responsive valve. The bypass line comprises a bypass control unit which can be controlled to move between a first position and a second position. In the first position the bypass control unit presents a check valve in the bypass line configured to permit flow through the bypass line only in a direction from the downstream end to the upstream end, and in the second position, the bypass control unit presents a line in the bypass line configured to permit flow from the upstream end to the downstream end to allow flow to bypass the pilot pressure responsive valve.

## Description

The present invention relates to a hydraulic system and a method of controlling the same.

In systems with double-acting hydraulic cylinders, over centre valves are typically used as braking mechanisms to prevent uncontrolled retraction or extension of the hydraulic cylinder. However, such braking mechanisms, while improving safety, also reduce efficiency of the hydraulic system.

According to a first aspect, there is provided a hydraulic system comprising:
a double-acting hydraulic cylinder configured to extend and to retract, and connected to a hydraulic circuit, the hydraulic circuit comprising:
   an over centre valve comprising:
   a pilot pressure responsive unidirectional valve defining an upstream end and a downstream end of the over centre valve corresponding to a permitted direction of flow through the pilot pressure responsive valve; and
   a bypass line in parallel with the pilot pressure responsive valve,
wherein the bypass line comprises a bypass control unit which can be controlled to move between a first position and a second position, wherein:
   in the first position the bypass control unit presents a check valve in the bypass line configured to permit flow through the bypass line only in a direction from the downstream end to the upstream end, and
   in the second position, the bypass control unit presents a line in the bypass line configured to permit flow from the upstream end to the downstream end to allow flow to bypass the pilot pressure responsive valve.

It may be that the bypass control unit is biased to the first position, and can be moved to the second position by an actuator. It may be that the bypass control unit is a solenoid valve such that the actuator is an electromagnetic actuator.

It may be that the hydraulic circuit further comprising a fast-action control unit disposed in a line diverging from the upstream end of the respective over centre valve. It may be that the over centre valve is positioned such that its upstream end is fluidically connected to the rod end of the cylinder. It may be that the fast-action control unit can be controlled to move between a first position and a second position, wherein:
in the first position the fast-action control unit permits the flow of hydraulic fluid from the rod end of the cylinder to the respective over centre valve; and
in the second position, the fast-action control unit permits the flow of hydraulic fluid away from the upstream end of the over centre valve towards the piston end of the cylinder.

It may be that the fast action control unit is biased to the first position, and can be moved to the second position by an actuator.

It may be that the hydraulic system comprises a load sensor configured to sense a load through the hydraulic system. It may be that the hydraulic system comprises an orientation sensor configured to sense an orientation of the hydraulic system.

It may be that the hydraulic system comprises two over centre valves including a first over centre valve and a second over centre valve. It may be that the first over centre valve is positioned such that its upstream end is fluidically connected to the piston end of the cylinder such that, on actuation of the pilot pressure responsive valve of the first over centre valve, fluid is permitted to flow from the piston end of the cylinder through the first over centre valve. It may be that the second over centre valve is positioned such that its upstream end is fluidically connected to the rod end of the cylinder such that, on actuation of the pilot pressure responsive valve of the second over centre valve, fluid is permitted to flow from the rod end of the cylinder through the second over centre valve.

According to a second aspect, there is provided a method of controlling a hydraulic system according to the first aspect and having two over centre valves, the method comprising:
determining an operation parameter relating to an operation of the hydraulic cylinder;
determining a loading parameter relating to a loading direction of a load on the hydraulic cylinder and/or a loading magnitude of the load on the hydraulic cylinder;
determining a condition of the hydraulic cylinder based on the operation parameter and the loading parameter, and
controlling the bypass control unit of the first and second over centre valve to be in the first position or the second position based on the determined condition of the hydraulic cylinder.

It may be that the operation parameter is selected from: (i) extension of the hydraulic cylinder relating to a rod of the hydraulic cylinder being pushed in an extension direction, and (ii) retraction of the hydraulic cylinder relating to the rod being pushed in a retraction direction; and

It may be that the loading direction of the loading parameter is selected from: (a) a load acting in the extension direction, and (b) a load acting in the retraction direction. It may be that the hydraulic system is controlled according to a direction condition. It may be that the bypass control unit of the first over centre valve is set in:
the first position when the operation parameter is in retraction, and the loading parameter is acting in the retraction direction; and
the second position when the operation parameter is in retraction, and the loading parameter is acting in the extension direction; and
wherein the bypass control unit of the second over centre valve is set in:
the first position when the operation parameter is in extension, and the loading parameter is acting in the extension direction;
the second position when the operation parameter is in extension, and loading parameter is acting in the retraction direction.

It may be that the loading magnitude of the loading parameter is selected from: (i) loaded when a magnitude of loading exceeds a loading threshold, and (ii) unloaded when the magnitude of loading is less than or equal to the loading threshold. It may be that the hydraulic system is controlled according to the direction condition when the loading magnitude is loaded. It may be that when the loading magnitude is unloaded, the hydraulic system is controlled according to a magnitude condition in which:
the bypass unit of the first over centre valve is set in the second position when the hydraulic cylinder is in retraction, and
the bypass unit of the second over centre valve is in the second position when the hydraulic cylinder is in extension.

It may be that the method further comprises controlling the fast-action control unit to be in the second position when the condition of the hydraulic system is determined to be in extension and unloaded.

It may be that the loading direction of the loading parameter is determined based on a length of extension of the hydraulic cylinder. It may be that the loading direction of the loading parameter is determined to be acting in extension when the length of the hydraulic cylinder is above a length threshold, and wherein the loading direction of the loading parameter is determined to be acting in retraction when the length of the hydraulic cylinder is equal to or below the length threshold.

It may be that the length threshold is determined based on a geometry of the hydraulic system.

It may be that the method comprises sensing the orientation of the hydraulic system. It may be that the length threshold is determined based on the sensed orientation of the hydraulic system.

It may be that the loading magnitude of the loading parameter is selected from a list including:
overloaded in which a change in pressure in a chamber of the hydraulic cylinder or a speed of movement of the hydraulic cylinder is above an overload threshold; and
underloaded in which the change in pressure in a chamber of the hydraulic cylinder or the speed of movement of the hydraulic cylinder is below or equal to the overload threshold;
wherein when the operation parameter is in extension, and the loading magnitude is overloaded, the second over centre valve is in the first position;
wherein when the operation parameter is in retraction, and the loading magnitude is overloaded, the first over centre valve is in the first position;
wherein when the operation parameter is in extension, and the loading magnitude is underloaded, the second over centre valve is in the second position; and
wherein when the operation parameter is in retraction, and the loading magnitude is underloaded, the first over centre valve is in the second position.

It may be that the method comprises sensing a parameter relating to a load through the hydraulic cylinder, and wherein the loading parameter is determined based on the sensed load.

The hydraulic system may be disposed in a crane, a hookloader or skiploader.

According to a third aspect, there is provided a hydraulic system according to this first aspect, comprising a controller configured to perform the method according to the second aspect.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described, by way of example only, with reference to the accompanying Figures, in which:
**Figure 1** schematically shows a side view of a partial hydraulic system of a hookloader;
**Figure 2** schematically shows a hydraulic fluid circuit for a first example hydraulic system;
**Figure 3** schematically shows a hydraulic fluid circuit for a second example hydraulic system;
**Figure 4** is a flow chart showing steps of a method for controlling the hydraulic system of Figures 2 and 3;
**Figure 5** is a flow chart showing steps of a first example decision tree for the method of controlling the hydraulic system of Figure 4; and
**Figure 6** is a flow chart showing steps of a second example decision tree for the method of controlling the hydraulic system of Figure 4.

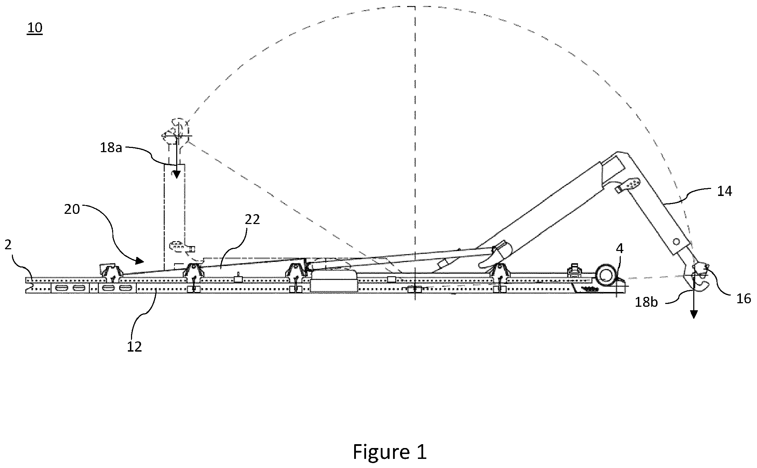

**Figure 1** shows a part of a hookloader 10 comprising a base 12 extending from a front end 2 to a back end 4, a hook arm 14 and a hydraulic system connected between the base 12 and the hook arm 14. The hook arm 14 is pivotably connected to the base12 at a proximal end of the hook arm 14, and the hydraulic system 20 is configured to pivotably move the hook arm 14 relative to the base 12 by extension and retraction of a pair of double-acting hydraulic cylinders 22 of the hydraulic system 20, such that when each of the hydraulic cylinder 22 is fully retracted, the hook arm 14 is disposed on the base 12 at the front end 2 (as shown in dotted lines on Figure 1), and when the hydraulic cylinder 22 is fully extended, the hook arm 14 is disposed off the base 12 at a back end 4.

The hook arm 14 comprises a hook 16 at a distal end of the hook arm 14, and the hook 16 is configured to couple to a bar on a container, to drag the container onto, and off from, the base 12. A trajectory of the hook 16 during extension and retraction of the hydraulic cylinder 22 forms an arc (shown in Figure 1). In this example, the trajectory can be split into two zones, divided by a vertical line from the point at which the hook arm 14 is pivotably attached to the base 12. In a first zone, when the hook 16 is towards the front end 2 of the base 12, a force applied to the hook 16 by a container (represented by an arrow 18a) results in a force on the hydraulic cylinder 22 in a retraction direction (i.e., to push the hydraulic cylinder 22 to retract). In a second zone, when the hook 16 is towards the back end 4 of the base 12, a force applied to the hook 16 by a container (represented by an arrow 18b) results in a force on the hydraulic cylinder 22 in an extension direction (i.e., to push the hydraulic cylinder to extend).

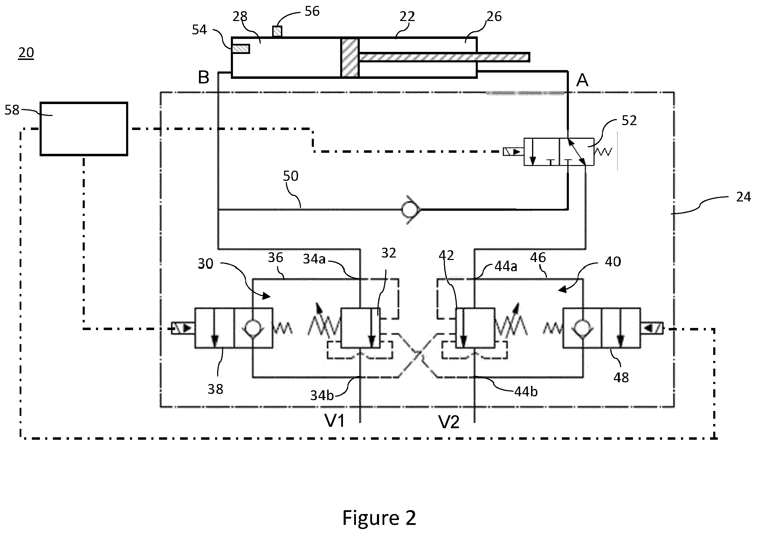

**Figure 2** shows the partial hydraulic system 20 comprising the double-acting hydraulic cylinder 22 which is configured to extend and retract, and which is connected to a hydraulic circuit 24. The hydraulic cylinder 22 comprises a piston which divides an internal chamber of the hydraulic cylinder 22 into a rod end 26 and a piston end 28.

The hydraulic circuit 24 comprises a first over centre valve (first OVC) 30 and a second over centre valve (second OVC) 40. The first OVC 30 and the second OVC 40 each comprise respectively a first pilot pressure responsive unidirectional valve 32 and a second pilot pressure responsive unidirectional valve 42. The first pilot pressure responsive valve 32 defines an upstream end 34a and a downstream end 34b of the first OVC 30, and the second pilot pressure responsive valve defines an upstream end 44a and a downstream end 44b of the second OVC 40, the upstream ends 34a, 44a and the downstream ends 34b, 44b corresponding to a permitted direction of flow through the respective first pilot pressure responsive valve 32 and second pilot pressure responsive valve 42.

In this example, the first OVC 30 is positioned such that its upstream end 34a is fluidically connected to the piston end 28 of the hydraulic cylinder 22 such that, on actuation of the first pilot pressure responsive valve 32, fluid is permitted to flow from the piston end 28 of the hydraulic cylinder 22 through the first OVC 30. In this example, the second OVC 40 is positioned such that its upstream end 44a is fluidically connected to the rod end 26 of the hydraulic cylinder 22, such that on actuation of the second pilot pressure responsive valve 42, fluid is permitted to flow from the rod end 26 of the hydraulic cylinder 22 through the second OVC 40.

The first OVC 30 comprises a first bypass line 36 in parallel with the first pilot pressure responsive valve 32, and the second OVC 40 comprises a second bypass line 46 in parallel with the second pilot pressure responsive valve 42.

The first bypass line 36 comprises a first bypass control unit 38. The second bypass line 46 comprises a second bypass control unit 48. In this example, the first bypass control unit 38 is similar to the second bypass control unit 48 and can be controlled to move between a first position and a second position. In the first position, the first bypass control unit 38 and the second bypass control unit 48 present a check valve in the respective first bypass line 36 and second bypass line 46 configured to permit flow through the respective first bypass line 36 and second bypass line 46 only in a direction from the downstream end 34b, 44b to the upstream end 34a, 44a. In the second position, the first bypass control unit 38 and the second bypass control unit 48 present a unidirectional line in the respective first bypass line 36 and second bypass line 46 to permit flow from the upstream end 34a, 44a to the downstream end 34b, 44b to allow flow to bypass the respective first pilot pressure responsive valve 32 and second pilot pressure responsive valve 42.

In some examples, the bypass control units may present any line in the second position which permits flow from the respective upstream end to the downstream end, such as a bi-directional line, or a restrictor. In other examples, the bypass control units may additionally or alternatively present any suitable component in the first position which permits flow only in a direction from the respective downstream end to the respective upstream end. In other examples, the bypass control units, may be proportional.

The first bypass control unit 38 and the second bypass control unit 48 in this example are biased to the first position, and can be moved to the second position by an actuator. In this example, the first bypass control unit 38 and the second bypass control unit 48 are similar and are in the form of a solenoid valve with an electromagnetic actuator.

The first OVC 30 and the second OVC 40 act as a braking mechanism in the hydraulic circuit 24 of the hydraulic system 20, when the respective first bypass control unit 38 and second bypass control unit 48 are in the first position, as shown in Figure 2. For example, when the hydraulic cylinder 22 is extending, hydraulic fluid must be removed from the rod end 26 of the hydraulic cylinder 22 into the hydraulic circuit 24, and hydraulic fluid must be introduced into the piston end 28 of the hydraulic cylinder 22 from the hydraulic circuit 24. In this example, the second bypass control unit 48, which is biased to the first position, and the second pilot pressure responsive valve 42 do not permit flow from the upstream end 44a of the second OVC 40 to the downstream end 44b of the second OVC 40 until the pilot pressure is sufficient (i.e., exceeds a pilot threshold) to actuate the second pilot pressure responsive valve 42 to present the unidirectional line, to permit flow from the upstream end 44a to the downstream end 44b. This similarly occurs with the first OVC 30 when the hydraulic cylinder 22 is retracting. This ensures that the extension or retraction of the hydraulic cylinder 22 does not go out of control.

When the first bypass control unit 38 is in the second position, flow of hydraulic fluid from the upstream end 34a to the downstream end 34b is allowed without requiring the pilot pressure to exceed the pilot threshold. Therefore, the braking action of the first OVC 30 is interrupted. A similar effect is achieved with the second OVC 40 when the second bypass control unit 48 is in the second position.

In some examples, the first bypass control unit and the second bypass control unit may not be the same, and may have any suitable form of actuator. In other examples, the first bypass control unit and the second bypass control unit may be biased to the second position, or may not be biased to any position, but rather simply remain in the last position that they are controlled to move to. Having the first bypass control unit 38 and the second bypass control unit 48 biased to the first position improves safety of the system,

Although it has been described that the hydraulic system comprises a first OVC 30 and a second OVC 40 connected respectively to a piston end 28 and a rod end 26 of the hydraulic cylinder 22, in other examples, there may be only a single over centre valve, which may be fluidically connected to the piston end or to the rod end of the cylinder.

In this example, the hydraulic circuit 24 comprises a return line 50 which is fluidically connected between the upstream end 34a of the first OVC 30 and the upstream end 44a of the second OVC 40, thereby fluidically connecting the rod end 26 of the hydraulic cylinder 22 with the piston end 28 of the hydraulic cylinder 22. A check valve in the return line 50 is configured to prevent flow (and thus, prevent communicating pressure) though the return line 50 from the piston end 28 to the rod end 26, and permit flow through the return line 50 from the rod end 26 to the piston end 28.

A fast action control unit 52 is disposed at a three-way junction between the rod end 26 of the hydraulic cylinder 22, the upstream end 44a of the second OVC 40 and the return line 50(i.e., it is disposed in a line diverging from the upstream end 44a of the second OVC 40). The fast action control unit 52 can be moved between a first position and a second position. In the first position (shown in Figure 2), the fast action control unit 52 conveys hydraulic fluid from the rod end 26 of the hydraulic cylinder 22 to the second OVC 40. In the second position, the fast action control unit 52 conveys hydraulic fluid from the rod end 26 to the piston end 28 through the return line 50. This can speed up extension of a hydraulic cylinder by conveying additional hydraulic fluid directly from the rod end 26 to the piston end 28 without requiring passage of the hydraulic fluid through the rest of the hydraulic circuit 24 (i.e. regeneration of fluid flow).

In this example, the fast action control unit 52 is biased to the first position and can be moved to the second position by an actuator, so that, in the event of failure of the actuator, the hydraulic fluid is automatically prevented from passing through the return line 50, and must be conveyed through the rest of the hydraulic circuit 24. This improves safety of the hydraulic system 20. In other examples, there may be no fast action control unit, or it may not be biased to a first position. In this example, the fast action unit is switched from first to second position with an electromagnetic actuator.

In this example, the hydraulic system 20 comprises a load sensor 54 which is configured to sense load through the hydraulic system 20. In this example, the load sensor 54 is disposed in the piston end 28 of the hydraulic cylinder 22, to measure pressure in the hydraulic cylinder 22. In other examples, the load sensor may be disposed in the rod end of the hydraulic cylinder, or in any suitable part of the hydraulic circuit or hydraulic system to monitor the load in the hydraulic cylinder(s). In other examples, there may be no load sensor in the hydraulic system, or there may be more than one sensor disposed in different locations such as a load sensor in both the rod end and the piston end of the hydraulic cylinder.

In this example, the hydraulic system 20 additionally comprises an orientation sensor 56 configured to sense the orientation of the hydraulic cylinder 22. The orientation of the hydraulic cylinder 22 may be indicative of the length of the hydraulic cylinder 22 (i.e., how far it has extended), for example, to determine which zone the hook 16 is in in the hookloader 10 of Figure 1, or otherwise to determine the direction of force on the hydraulic cylinder 22 that a load is applying. The orientation sensor may be a gyroscopic sensor which can take into account any slope on which the hydraulic system is positioned, or an extension sensor which determines the length of the hydraulic cylinder and is able to derive the angle of the hydraulic cylinder on this basis. In some examples, there may be no orientation sensor. In some examples, outputs of more than one sensor may be combined to sense the orientation of the hydraulic cylinder 22 or the hookloader.

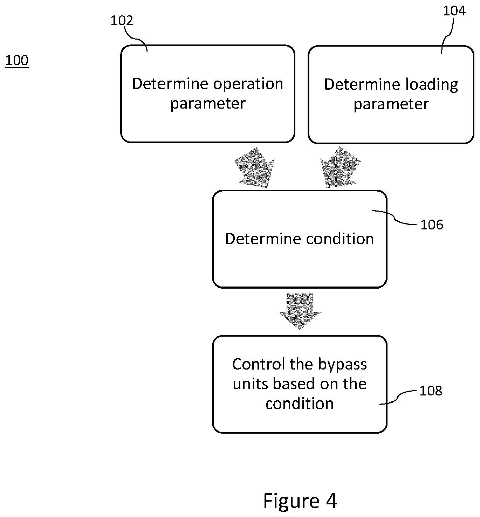

In this example, a controller 58 is connected to the first bypass control unit 38, the second bypass control unit 48 and the fast action control unit 52 and is configured to control the actuators on each unit according to the flow chart and decision trees described with reference to Figures 4-6. In other examples, each control unit may comprise an individual controller to control the unit.

Although the hydraulic system is shown as part of a hookloader, the hydraulic system could also be incorporated into any suitable application such as a crane or a skiploader.

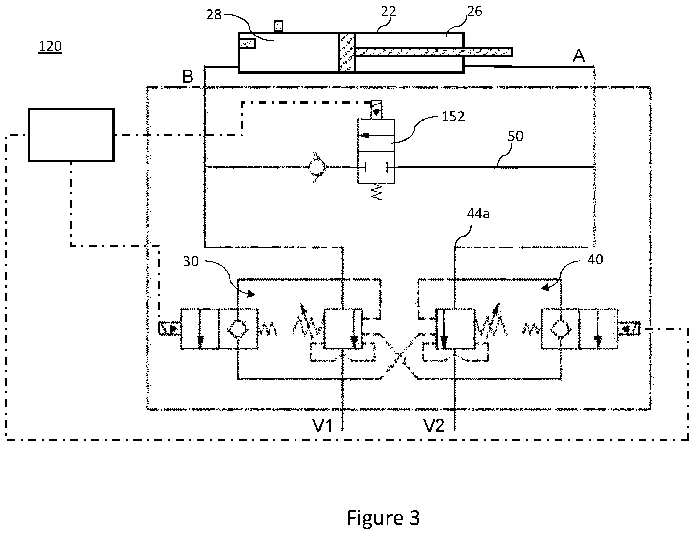

**Figure 3** shows a second example hydraulic system 120 which is similar to the first example hydraulic system 20, with the same first OVC 30 and second OVC 40. The second example hydraulic system 120 differs from the first example hydraulic system 20 in that it has a different fast action control unit 152, which is also in a different location.

The fast action control unit 152 is disposed on the return line 50 itself, rather than at a junction, and therefore has a different configuration to ensure that, in a first position to which it is biased, the fast action control unit 152 does not permit fluid to flow from the rod end 26 to the piston end 28 of the hydraulic cylinder 22, and instead conveys the fluid to the upstream end 44a of the second OVC 40. In the second position, the fast action control unit 152 permits the flow of hydraulic fluid away from the upstream end 44a of the second OVC 40 towards the piston end 28.

In this example, in the first position, the fast action control unit 152 presents a stop in the return line 50. In some examples, in the first position, the fast action control unit may present any suitable component to prevent the flow of fluid from the rod end 26 to the piston end 28 through the return line 50, such as a check valve.

In this example, in the second position, the fast action control unit 152 present a unidirectional line in the return line 50. In other examples, in the second position, any suitable component which permits the flow of hydraulic fluid at least from the rod end 26 to the piston end 28 through the return line 50 may be used.

Although the second example hydraulic system has been shown with a stop in the line, this may be any suitable component which prevents flow from the rod end of the cylinder to the piston end of the cylinder through the return line. For example, the stop may comprise a double check valve, or a single check valve which opposes the check valve in the return line.

Although the bypass units of the over centre valves have been described as comprising a check valve and a unidirectional valve allowing opposing flow directions, it will be appreciated that the over centre valves may comprise any suitable valve arrangements for allowing flow in opposing directions. For example, the second position of the over centre valves may comprise a bidirectional line. In other examples, the unidirectional line may comprise a variable flow restrictor. In some examples, bypass units could be proportional.

**Figure 4** is a flow chart showing steps of a method 100 of controlling the first example hydraulic system 20 and the second example hydraulic system 120 described with reference to Figures 2 and 3.

In block 102, the method 100 comprises determining an operation parameter relating to an operation of the hydraulic cylinder 22. In this example, the operation parameter is selected from the hydraulic cylinder 22 being in extension or in retraction. The operation parameter being in extension relates to the piston of the hydraulic cylinder 22 being pushed in the extension direction, and the operation parameter being in retraction relates to the piston of the hydraulic cylinder 22 being pushed in a retraction direction. The operation parameter may be determined by a control module, for example which is controlling the extension or retraction of the hydraulic cylinder, or may be determined by any suitable means. In other examples, the operation parameter may be any suitable parameter to determine which direction the piston of the hydraulic cylinder is being controlled to move in.

In block 104, the method 100 comprises determining a loading parameter relating to a loading direction of a load on the hydraulic cylinder 22. It may alternatively or additionally relate to a loading magnitude of the load on the hydraulic cylinder 22. The loading direction may be selected from a load acting in the extension direction and a load acting in the retraction direction. The loading direction and/or the loading magnitude may be determined by the load sensor 54.

In an example, the loading direction may be determined based on the length of extension of the hydraulic cylinder 22. For example, in the hookloader 10 described with reference to Figure 1, the extension of the hydraulic cylinder 22 is directly related to the position of the hook 16, and the position of the hook 16 relative to the pivot point of the hook arm 14 to the base 12 relates to the loading direction. In such an example, when the length of the hydraulic cylinder 22 is above a length threshold (corresponding to the position of the hook 16 being vertically above the pivot point between the hook arm 14 and the base 12), the loading direction can be determined to be acting in the extension direction. When the length of extension of the hydraulic cylinder is equal to or below the length threshold, the loading direction can be determined to be acting in the retraction direction. In such an example, the length threshold is determined by the geometry of the hydraulic system. In other examples, the length threshold may also be determined by sensing the orientation of the hydraulic system, which may change the length of extension at which the hook 16, for example, is vertically above the pivot point of the hook arm 14. It will be appreciated that, for other geometries, the length threshold may be determined in any suitable manner.

Blocks 102 and 104 feed into block 106, in which a condition of the hydraulic cylinder in determined based on the operation parameter and the loading parameter. When the operation parameter is in extension and the loading direction is a load acting in the extension direction, the force from the hydraulic fluid being introduced into the piston end 28 of the hydraulic cylinder 22 and the force from the load are acting in the same direction, such that it is possible that this could result in uncontrolled extension, such that the condition of the hydraulic cylinder may be considered to be uncontrolled. In such a condition, the second OVC 40 should preferably be acting as a brake to prevent this uncontrolled extension, by allowing the discharge of fluid from the rod end 26 of the hydraulic cylinder 22 only in the presence of pilot pressures at the required levels. This may occur for example, when the hookloader 10 in Figure 1 is in the second zone when the hydraulic cylinder 22 is extending.

Similarly, when the operation parameter is in retraction, and the loading parameter is a load acting in the retraction direction, the force from the hydraulic fluid being introduced into the rod end 26 of the hydraulic cylinder 22 and the force from the load are acting in the same direction, such that the retraction of the hydraulic cylinder may be uncontrolled, and the condition of the hydraulic cylinder 22 may be considered to be uncontrolled.

When the operation parameter and the loading parameter indicate that the forces are opposing, for example when the operation parameter is in extension and the loading parameter is a load acting in the retraction direction, the force from the hydraulic fluid being introduced into the piston end 28 opposes the force from the load and so this acts as a natural brake. The condition of the hydraulic cylinder 22 may therefore be considered to be controlled, in this instance. Alternatively, when the operation parameter is in retraction and the loading parameter is a load acting in the extension direction, the force on the piston of hydraulic fluid being introduced into the rod end 26 opposes the force of the load, such that the condition of the hydraulic cylinder may be considered to be controlled.

In block 108, the first bypass control unit 38 and the second bypass control unit 48 are controlled based on the determined condition of the hydraulic cylinder.

For example, when the condition is determined to be uncontrolled, either the first OVC 30 or the second OVC 40 may be acting as a brake (i.e., is controlled to be in the first position) by only allowing the discharge of hydraulic fluid from the piston end 28 or the rod end 26 respectively due to the presence of pilot pressure above a threshold level acting on pilot pressure responsive valves 32 and 42 , to prevent uncontrolled extension or retraction of the hydraulic cylinder 22, respectively.

When the condition is determined to be controlled, there is no need for either the first OVC 30 or the second OVC 40 to act as a brake. In other words, the first pilot pressure responsive valve 32 and the second pilot pressure responsive valve 42 can be bypassed, and so either the first bypass control unit 38 or the second bypass control unit 48 may be controlled to be in the second position.

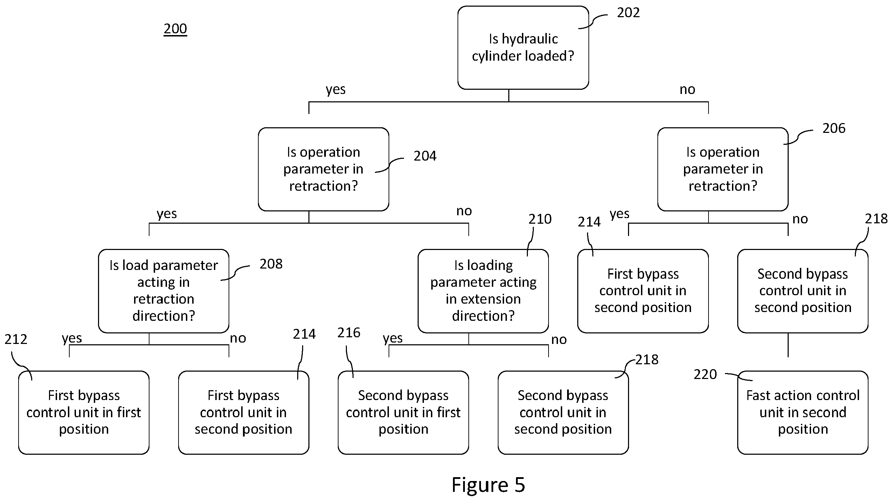

Figure 5 shows a first example decision tree 200 for controlling a hydraulic system 20, including controlling the first bypass control unit 38, the second bypass control unit 48, and the fast action control unit 52, 152, based on the determined operation parameters and the loading parameters.

The first example decision tree 200 comprises block 202 in which a loading magnitude is determined to determine whether the hydraulic cylinder is loaded. In this example, the loading magnitude is selected from loaded or unloaded, in which loaded relates to a magnitude of loading on the hydraulic cylinder exceeding a loading threshold, and unloaded relates to the magnitude of loading being less than or equal to the loading threshold.

For example, in the example hookloader 10 of Figure 1, it may be considered to be loaded when the hook 16 is coupled to a container, and may be considered to be unloaded the hook 16 is not coupled to a container. The loading magnitude may be determined by the load sensor 54 or a combination of loading sensors in the piston end 28 and the rod end 26.

If the answer to block 202 is "yes" (i.e., the hydraulic cylinder 22 is loaded), the decision tree proceeds to block 204 in which the hydraulic system 20 is controlled according to a direction condition. If the answer to block 202 is "no" (i.e., the hydraulic cylinder 22 is unloaded), the decision tree proceeds to block 206 in which the hydraulic system 20 is controlled according to a magnitude condition.

In block 204, it is determined whether the operation parameter is in retraction. If the answer to block 204 is "yes" (i.e., the hydraulic cylinder 22 is in retraction), the decision tree proceeds to block 208. If the answer to block 204 is "no" (i.e., the hydraulic cylinder is in extension), the decision tree proceeds to block 210.

In block 208, it is determined whether the loading parameter is acting in the retraction direction. If the answer to block 208 is "yes" (i.e., the operation parameter is in retraction, and the loading parameter is in the retraction direction), the decision tree proceeds to block 212 in which the first bypass control unit 38 is controlled to be in the first position, such that the first OVC 30 acts as a brake using pilot based control with the first pilot pressure responsive 32 to slow the discharge of fluid from the piston end 28 of the hydraulic cylinder 22, to prevent uncontrolled retraction of the hydraulic cylinder 22.

If the answer to block 208 is "no" (i.e., the operation parameter is in retraction, and the loading parameter is in the extension direction), the decision tree proceeds to block 214 in which the first bypass control unit 38 is controlled to be in the second position, such that the first OVC 30 does not acts as a brake to the discharge of fluid from the piston end 28 of the hydraulic cylinder 22, since the discharge is considered to be controlled. This improves the efficiency of the hydraulic system 20, since the braking from the first OVC 30 is not unnecessarily applied (e.g., the cylinder can be moved without the need of pilot pressure which is unnecessary in this case). The second bypass control unit 48 may be in either the first position or the second position (if the second position presents a bidirectional line), since in both positions, the second OVC 40 would permit flow from the downstream end 44b to the upstream end 44a.

In block 210, it is determined whether the loading parameter is acting in the extension direction. If the answer to block 210 is "yes" (i.e., the operation parameter is in extension, and the loading parameter is in the extension direction), the decision tree proceeds to block 216 in which the second bypass control unit 48 is controlled to be in the first position, such that the second OVC 40 acts as a brake with pilot based control with the second pilot pressure responsive valve 42 to slow the discharge of fluid from the rod end 26 of the hydraulic cylinder 22, to prevent uncontrolled extension of the hydraulic cylinder 22.

If the answer to block 210 is "no" (i.e., the operation parameter is in extension, and the loading parameter is in the retraction direction), the decision tree proceeds to block 218 in which the second bypass control unit 48 is controlled to be in the second position, such that the second OVC 40 does not acts as a brake to the discharge of fluid from the rod end 26 of the hydraulic cylinder 22, since the discharge is considered to be controlled. This also improves the efficiency of the hydraulic system 20, for the same reason that block 214 does. The first bypass control unit 38 may be in either the first position or the second position (if the second position presents a bidirectional line), since in both positions, the first OVC 30 would permit flow from the downstream end 34b to the upstream end 34a.

Returning to block 206 which follows the magnitude condition, it is determined whether the operation parameter is in retraction (in a similar manner to block 204). If the answer to block 206 is "yes" (i.e., the operation parameter is in retraction while the hydraulic cylinder 22 is unloaded), then the decision tree proceeds to block 214 to control the first bypass control unit 38 to be in the second position.

If the answer to block 206 is "no" (i.e., the operation parameter is in extension while the hydraulic cylinder 22 is unloaded), then the decision tree proceeds to block 218 to control the second bypass control unit 48 to be in the second position. The decision tree also proceeds to block 220 in which the fast action control unit 52, 152 is controlled to be in the second position, so that the hydraulic fluid can be transferred directly from the rod end 26 to the piston end 28. This also improves the efficiency of the hydraulic system 20.

Since each of the first bypass control unit 38, the second bypass control unit 48 and the fast action control unit 52, 152 are biased to the first position, in the absence of actively controlling them to be in the second position, they will be in the first position. This improves the safety of the hydraulic system 20, since if any actuators fail, the valves will automatically be in the braking (i.e., conservatively safer) position.

With the hydraulic cylinder 22 being unloaded in the magnitude condition (at block 206), it is considered that the direction of loading is less important since the force applied to the hydraulic cylinder by an external load is considered to be negligible, such that uncontrolled retraction or extension is much less likely. Therefore, considering whether the hydraulic cylinder is loaded in block 202 and controlling the hydraulic system based on the direction condition when it is loaded, and the magnitude condition when it is not loaded improves the efficiency of the hydraulic system 20.

Although the first example decision tree 200 takes the loading magnitude into account in block 202, in other examples, block 202 may not be considered, and instead the whole decision tree may start from block 204, so that the magnitude condition is not applied, so that the hydraulic system 20 is always controlled according to the direction condition.

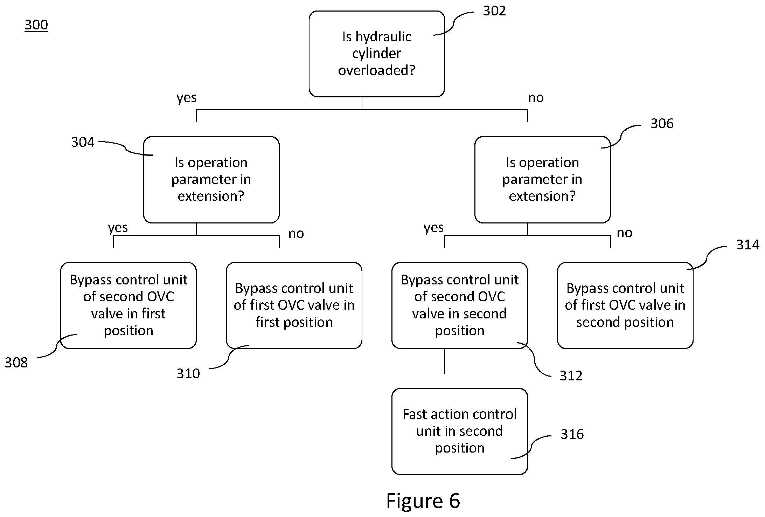

**Figure 6** is a second example decision tree 300 for controlling a hydraulic system 20, including controlling the first bypass control unit 38, the second bypass control unit 48, and the fast action control unit 52, 152, based on the determined operation parameters and the loading parameters.

The second example decision tree 300 comprises block 302 in which a loading magnitude is determined. In this example, the loading magnitude is selected from overloaded or underloaded, in which overloaded relates to a change in pressure in a chamber of the hydraulic cylinder 22 or a speed of movement of the hydraulic cylinder 22 being above an overload threshold, and underloaded relates to the change in pressures (differential) in a chambers of the hydraulic cylinder 22 or the speed of movement of the hydraulic cylinder 22 being below or equal to the overload threshold.

If the answer to block 302 is "yes" (i.e., the hydraulic cylinder 22 is overloaded), the decision tree proceeds to block 304. If the answer to block 302 is "no" (i.e., the hydraulic cylinder 22 is underloaded), the decision tree proceeds to block 306.

In block 304, it is determined whether the operation parameter is in extension. If the answer to block 304 is "yes" (i.e., the hydraulic cylinder 22 is in extension), the decision tree proceeds to block 308. If the answer to block 304 is "no" (i.e., the hydraulic cylinder is in retraction), the decision tree proceeds to block 310.

Block 308 is similar to block 216 of the first example decision tree 200, in that the second bypass control unit 48 is controlled to be in the first position, such that the second OVC 40 acts as a brake with pilot based control with the second pilot pressure responsive valve 42 to slow the discharge of fluid from the rod end 26 of the hydraulic cylinder 22, to prevent uncontrolled extension of the hydraulic cylinder 22.

Block 310 is similar to block 212 of the first example decision tree 200, in that the first bypass control unit 38 is controlled to be in the first position, such that the first OVC 30 acts as a brake with pilot based control with the first pilot pressure responsive valve 32 to slow the discharge of fluid from the piston end 28 of the hydraulic cylinder 22, to prevent uncontrolled retraction of the hydraulic cylinder 22.

In block 306, it is determined whether the operation parameter is in extension. If the answer to block 306 is "yes" (i.e., the hydraulic cylinder 22 is in extension), the decision tree proceeds to block 312 and 316. If the answer to block 306 is "no" (i.e., the hydraulic cylinder is in retraction), the decision tree proceeds to blocks 314.

Block 312 is similar to block 218 of the first example decision tree 200, in that the second bypass control unit 48 is controlled to be in the second position, such that the second OVC 40 does not acts as a brake to the discharge of fluid from the rod end 26 of the hydraulic cylinder 22, since the discharge is considered to be controlled.

Block 314 is similar to block 214 of the first example decision tree 200, in that the first bypass control unit 38 is controlled to be in the second position, such that the first OVC 30 does not acts as a brake to the discharge of fluid from the piston end 28 of the hydraulic cylinder 22, since the discharge is considered to be controlled.

Block 316 is similar to block 220 of the first example decision tree 200, in that the fast action control unit 52, 152 is controlled to be in the second position, so that the hydraulic fluid can be transferred directly from the rod end 26 to the piston end 28.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A hydraulic system comprising:
a double-acting hydraulic cylinder configured to extend and to retract, and connected to a hydraulic circuit, the hydraulic circuit comprising:
an over centre valve comprising:
a pilot pressure responsive unidirectional valve defining an upstream end and a downstream end of the over centre valve corresponding to a permitted direction of flow through the pilot pressure responsive valve; and
a bypass line in parallel with the pilot pressure responsive valve,
wherein the bypass line comprises a bypass control unit which can be controlled to move between a first position and a second position, wherein:
in the first position the bypass control unit presents a check valve in the bypass line configured to permit flow through the bypass line only in a direction from the downstream end to the upstream end, and
in the second position, the bypass control unit presents a line in the bypass line configured to permit flow from the upstream end to the downstream end to allow flow to bypass the pilot pressure responsive valve.

2. A hydraulic system according to any preceding claim, the hydraulic circuit further comprising a fast-action control unit disposed in a line diverging from the upstream end of the respective over centre valve, wherein the over centre valve is positioned such that its upstream end is fluidically connected to the rod end of the cylinder, wherein the fast-action control unit can be controlled to move between a first position and a second position, wherein:
in the first position the fast-action control unit permits the flow of hydraulic fluid from the rod end of the cylinder to the respective over centre valve; and
in the second position, the fast-action control unit permits the flow of hydraulic fluid away from the upstream end of the over centre valve towards the piston end of the cylinder.

3. A hydraulic system according to any preceding claim, comprising two over centre valves including a first over centre valve and a second over centre valve, wherein:
the first over centre valve is positioned such that its upstream end is fluidically connected to the piston end of the cylinder such that, on actuation of the pilot pressure responsive valve of the first over centre valve, fluid is permitted to flow from the piston end of the cylinder through the first over centre valve; and
the second over centre valve is positioned such that its upstream end is fluidically connected to the rod end of the cylinder such that, on actuation of the pilot pressure responsive valve of the second over centre valve, fluid is permitted to flow from the rod end of the cylinder through the second over centre valve.

4. A method of controlling a hydraulic system according to claim 3, the method comprising:
determining an operation parameter relating to an operation of the hydraulic cylinder;
determining a loading parameter relating to a loading direction of a load on the hydraulic cylinder and/or a loading magnitude of the load on the hydraulic cylinder;
determining a condition of the hydraulic cylinder based on the operation parameter and the loading parameter, and
controlling the bypass control unit of the first and second over centre valve to be in the first position or the second position based on the determined condition of the hydraulic cylinder.

5. A method of controlling a hydraulic system according to claim 4, wherein the operation parameter is selected from:
(i) extension of the hydraulic cylinder relating to a rod of the hydraulic cylinder being pushed in an extension direction, and
(ii) retraction of the hydraulic cylinder relating to the rod being pushed in a retraction direction; and

6. A method of controlling a hydraulic system according to claim 5, wherein the loading direction of the loading parameter is selected from:
(a) a load acting in the extension direction, and
(b) a load acting in the retraction direction; and
wherein the hydraulic system is controlled according to a direction condition, wherein the bypass control unit of the first over centre valve is set in:
the first position when the operation parameter is in retraction, and the loading parameter is acting in the retraction direction; and
the second position when the operation parameter is in retraction, and the loading parameter is acting in the extension direction; and
wherein the bypass control unit of the second over centre valve is set in:
the first position when the operation parameter is in extension, and the loading parameter is acting in the extension direction;
the second position when the operation parameter is in extension, and loading parameter is acting in the retraction direction.

7. A method of controlling a hydraulic system according to claim 6, wherein the loading magnitude of the loading parameter is selected from:
(i) loaded when a magnitude of loading exceeds a loading threshold, and
(ii) unloaded when the magnitude of loading is less than or equal to the loading threshold; and wherein the hydraulic system is controlled according to the direction condition when the loading magnitude is loaded; and
wherein when the loading magnitude is unloaded, the hydraulic system is controlled according to a magnitude condition in which:
the bypass unit of the first over centre valve is set in the second position when the hydraulic cylinder is in retraction, and
the bypass unit of the second over centre valve is in the second position when the hydraulic cylinder is in extension.

8. A method according to claim 7 when appendant to claim 2, further comprising:
controlling the fast-action control unit to be in the second position when the condition of the hydraulic system is determined to be in extension and unloaded.

9. A method of controlling a hydraulic system according to any of claims 4-8, wherein the loading direction of the loading parameter is determined based on a length of extension of the hydraulic cylinder.

10. A method of controlling a hydraulic system according to claims 6 and 9, wherein the loading direction of the loading parameter is determined to be acting in extension when the length of the hydraulic cylinder is above a length threshold, and wherein the loading direction of the loading parameter is determined to be acting in retraction when the length of the hydraulic cylinder is equal to or below the length threshold.

11. A method of controlling a hydraulic system according to claim 10, wherein the length threshold is determined based on a geometry of the hydraulic system.

12. A method of controlling a hydraulic system according to claim 10 or 11, comprising:
sensing the orientation of the hydraulic system;
wherein the length threshold is determined based on the sensed orientation of the hydraulic system.

13. A method of controlling a hydraulic system according to claim 5-12, wherein the loading magnitude of the loading parameter is selected from a list including:
overloaded in which a change in pressure in a chamber of the hydraulic cylinder or a speed of movement of the hydraulic cylinder is above an overload threshold; and
underloaded in which the change in pressure in a chamber of the hydraulic cylinder or the speed of movement of the hydraulic cylinder is below or equal to the overload threshold;
wherein when the operation parameter is in extension, and the loading magnitude is overloaded, the second over centre valve is in the first position;
wherein when the operation parameter is in retraction, and the loading magnitude is overloaded, the first over centre valve is in the first position;
wherein when the operation parameter is in extension, and the loading magnitude is underloaded, the second over centre valve is in the second position; and
wherein when the operation parameter is in retraction, and the loading magnitude is underloaded, the first over centre valve is in the second position.

14. A method of controlling a hydraulic system according to any of claims 4-13, comprising sensing a parameter relating to a load through the hydraulic cylinder, and wherein the loading parameter is determined based on the sensed load.

15. A hydraulic system according to any of claims 1-3, comprising a controller configured to perform the method according to any of claims 4-14.
